# EUROPÄISCHE PATENTANMELDUNG

(11) **EP 1 342 934 A2**
(43) Veröffentlichungstag der Anmeldung: **10.09.2003**
(21) Anmeldenummer: 03013221.1
(22) Anmeldetag: 21.12.1999
(51) Int. Cl.: F16H 3/00

(54) **Zahnräderwechselgetriebe mit zwei im Kraftfluss parallel zueinander angeordneten Teilgetrieben**

(30) Priorität: 24.12.1998 DE 19860250; 24.04.1999 DE 19918732
(62) Teilanmeldung aus: 99964641.7
(71) Anmelder: DaimlerChrysler AG, 70567 Stuttgart (DE)
(72) Erfinder: Geiberger, Axel, 55128 Mainz (DE); Heinzel, Markus, 73072 Donzdorf (DE); Kolb, Andreas, 73249 Wernau (DE); Sperber, Ralf, 73240 Wendlingen (DE); Straub, Heinrich, 70327 Stuttgart (DE); Wörner, Günter, 71394 Kernen (DE)

(57) **Zusammenfassung**

Es betrifft ein Doppelkupplungsgetriebe mit zwei Getriebekonstanten. Das Eingangszahnrad (28) der einen Getriebekonstanten is als kuppelbares Losrad ausgeführt, wohingegen das Eingangszahnrad (26) der anderen Getriebekonstanten als Festrad ausgeführt ist.

## Beschreibung

Die Erfindung betrifft gemäß dem einteiligen Patentanspruch 1 ein Zahnräderwechselgetriebe mit zwei im Kraftfluß parallel zueinander angeordneten Teilgetrieben.

Die in Kraftfahrzeugen vorherrschenden Handschaltgetriebe mit einer Reibkupplung sind einfach und robust, haben jedoch den Nachteil, daß während des Gangwechsels eine Zugkraftunterbrechung auftritt. Konventionelle Automatikgetriebe mit einem hydrodynamischen Wandler vermeiden zwar eine Zugkraftunterbrechung während des Gangwechsels, besitzen jedoch aufgrund des Wandlers einen schlechteren Wirkungsgrad als Handschaltgetriebe. Ferner besitzen sie ein höheres Gewicht und sind kostenintensiver.

Bei Zahnräderwechselgetrieben mit zwei reibschlüssigen Lastschaltkupplungen und zwei im Kraftfluß parallel zueinander angeordneten Teilgetrieben können Gangwechsel unter Last durchgeführt werden, und zwar mit einer Überschneidungssteuerung der Lastschaltkupplungen. Damit können kostengünstige Automatikgetriebe mit einem guten Wirkungsgrad erreicht werden. In der Regel sind die geraden Getriebegänge dem einen Teilgetriebe und die ungeraden Getriebegänge dem anderen Teilgetriebe zugeordnet, so daß sequentiell unter Last geschaltet werden kann, jedoch nicht ohne weiteres einzelne Getriebegänge übersprungen werden können, sogenanntes Doppelhochschalten bzw. Doppelrückschalten.

Aus der US 4,658,663 ist ein gattungsbildendes Zahnräderwechselgetriebe bekannt. Bei dem Zahnräderwechselgetriebe ist eine Eingangswelle mit einer Ausgangswelle durch ein erstes und ein zweites Teilgetriebe verbunden, die im Kraftfluß parallel zueinander angeordnet sind und je eine reibschlüssige Lastschaltkupplung aufweisen. Mit den Lastschaltkupplungen sind konzentrisch zueinander angeordnete Zwischenwellen der Teilgetriebe mit der Eingangswelle verbindbar. Die Zwischenwellen sind über Getriebekonstanten, über eine gemeinsame, parallel zur Eingangswelle angeordnete Vorgelegewelle und über Zahnradpaare mit der Ausgangswelle wirkungsmäßig verbindbar. Die Zahnradpaare für die Vorwärtsgetriebegänge I, III, und IV sowie das Zahnradpaar für den Rückwärtsgetriebegang gehören dem ersten Teilgetriebe an. Der vierte Getriebegang ist als direkter Getriebegang ausgelegt und kann durch Einrücken eines Schaltelements zwischen der Ausgangswelle und der Zwischenwelle des ersten Teilgetriebes geschaltet werden.

Dem zweiten Teilgetriebe gehören die Zahnradpaare der Vorwärtsgänge II und V sowie ein zusätzliches Zahnradpaar an, deren Übersetzung gleich der Übersetzung des dritten Getriebegangs ist, dessen Zahnradpaar dem ersten Teilgetriebe angehört. Im ersten Teilgetriebe ist eine Zahnradkupplung für den dritten Getriebegang und die Direktkupplung für den vierten Getriebegang zu einer Wechselkupplung mit einer gemeinsamen Schaltschiebemuffe zusammengefaßt, welche mit einem Losrad des Zahnradpaars für den dritten Getriebegang oder mit der Ausgangswelle kuppelbar ist.

Zwar sind ohne Unterbrechung der Drehmomentübertragung bei dem Zahnräderwechselgetriebe alle Doppelrückschaltungen und Doppelhochschaltungen möglich, jedoch erfordern die Schaltungen vom direkten vierten Getriebegang zu dem ersten und dritten Getriebegang, deren Zahnradpaare ebenfalls dem ersten Teilgetriebe angehören, die zwischenzeitliche Einschaltung des zusätzlichen Zahnradpaars des dritten Getriebegangs. Zum Anfahren aus dem ersten Getriebegang wird stets die erste Lastschaltkupplung des ersten Teilgetriebes genutzt, wodurch an dieser gegenüber der zweiten Lastschaltkupplung ein erhöhter Verschleiß auftritt.

Ferner ist in der DE 31 31 156 A1 in Fig. 1 ein Zahnräderwechselgetriebe gezeigt, welches zwei Lastschaltkupplungen aufweist. Die eine Lastschaltkupplung ist drehfest mit einem Zahnrad einer Konstanten verbunden, welches mit einem zweiten Zahnrad kämmt, das drehfest mit einer parallel angeordneten Vorgelegewelle verbunden ist. Die andere Lastschaltkupplung ist drehfest mit einem Zahnrad verbunden, welches mit einem Losrad kämmt, das drehbar auf der besagten Vorgelegewelle angeordnet ist.

Der Erfindung liegt die Aufgabe zugrunde, ein gattungsgemäßes Zahnräderwechselgetriebe weiterzuentwickeln, insbesondere deren Bauaufwand, Kosten und Gewicht zu reduzieren und den Wirkungsgrad zu erhöhen. Sie wird gemäß der Erfindung durch die Merkmale der unabhängigen Ansprüche gelöst. Weitere Ausgestaltungen ergeben sich aus den Unteransprüchen.

Bei dem erfindungsgemäßen Zahnräderwechselgetriebe ist eine Eingangswelle mit einer Ausgangswelle durch zumindest ein erstes und ein zweites Teilgetriebe verbunden. Die beiden Teilgetriebe sind im Kraftfluß parallel zueinander angeordnet. Jedes Teilgetriebe besitzt eine reibschlüssige Lastschaltkupplung und eine Zwischenwelle, wobei jeweils die Zwischenwelle über die Lastschaltkupplung mit der Eingangswelle wirkungsmäßig verbindbar ist. Ferner besitzt das Zahnräderwechselgetriebe zumindest eine Getriebekonstante je Teilgetriebe, die jeweils ein Zahnrad auf einer der beiden Zwischenwellen aufweisen, von denen zumindest eines mit einer ersten parallel zur Eingangswelle angeordneten Vorgelegewelle wirkungsmäßig verbindbar ist. Die Lastschaltkupplung des ersten Teilgetriebes ist über die erste Getriebekonstante mit einer zur Eingangswelle parallelen zweiten Vorgelegewelle in Wirkverbindung bringbar. Diese zweite Vorgelegewelle ist durch zumindest ein dem ersten Teilgetriebe zugeordnetes Zahnradpaar mit der Ausgangswelle in Wirkverbindung bringbar. Die Lastschaltkupplung des ersten Teilgetriebes ist über die erste Getriebekonstante mit einer zur Eingangswelle parallelen zweiten Vorgelegewelle in Wirkverbindung bringbar. Diese zweite Vorgelegewelle ist durch zumindest ein dem ersten Teilgetriebe zugeordnetes Zahnradpaar mit der Ausgangswelle in Wirkverbindung bringbar. In besonders vorteilhafter Weise weist die erste Getriebekonstante ein auf der Vorgelegewelle konzentrisch und drehfest angeordnetes Festrad auf, das mit einem auf der Zwischenwelle des ersten Teilgetriebes konzentrisch und drehbar angeordneten Losrad kämmt, wohingegen die andere Getriebekonstante zwei Festräder besitzt.

In einer vorteilhaften Ausgestaltung kann von beiden Lastschaltkupplungen über zumindest eine Getriebekonstante auf eine Vorgelegewelle abgetrieben werden. Es können mit einer bestimmten Anzahl von Zahnradpaaren besonders viele Lastschaltmöglichkeiten und insbesondere zumindest die wichtigsten Doppelhoch- und Doppelrückschaltungen unter Last ohne zusätzliche Zahnradpaare erreicht werden. Ist zumindest ein Zahnrad der Getriebekonstanten auf einer Zwischenwelle als Losrad ausgeführt und über wenigstens ein Schaltelement mit der ersten Lastschaltkupplung und über ein Schaltelement mit der zweiten Lastschaltkupplung in Wirkverbindung bringbar bzw. vorzugsweise direkt über jeweils ein Schaltelement mit jeweils einer Zwischenwelle verbindbar, kann eine Getriebekonstante besonders konstruktiv einfach, platzsparend und mit einem hohen Wirkungsgrad bzw. mit geringen Verlusten durch Zahneingriffe mit der ersten und der zweiten Lastschaltkupplung in Wirkverbindung gebracht werden.

Es kann erreicht werden, daß bei sämtlichen Getriebegängen beide Lastschaltkupplungen geschlossen werden können.

Ist zumindest die dem niedrigsten Getriebegang zugeordnete Getriebekonstante mit der ersten und der zweiten Lastschaltkupplung in Wirkverbindung bringbar, kann vorteilhaft wahlweise die erste, die zweite oder beide Lastschaltkupplungen zum Anfahren genutzt werden. Die sich aus dem Anfahrvorgang ergebende Belastung kann auf beide Lastschaltkupplungen verteilt werden. Eine überhöhte Temperatur kann trotz kostengünstiger Dimensionierung vermieden, der Verschleiß reduziert und die Wartungsintervalle können verlängert werden. Ferner kann bei Ausfall einer Lastschaltkupplung die zweite Lastschaltkupplung zum Anfahren aus dem ersten Getriebegang genutzt und die Mobilitätssicherheit erhöht werden.

Die Lastschaltkupplungen können auch unterschiedlich für verschiedene Anfahrvorgänge ausgelegt werden und/oder einzeln oder gemeinsam zum Anfahren aus einem höheren Getriebegang genutzt werden. Die Lastschaltkupplungen werden vorteilhaft abhängig von zumindest einem Betriebsparameter einzeln oder gemeinsam zum Anfahren genutzt, beispielsweise abhängig von einer an den Lastschaltkupplungen erfaßten Belastung, Reibung, Temperatur und/oder Verschleiß usw.

Ferner wird vorgeschlagen, daß die Lastschaltkupplung des ersten Teilgetriebes über die erste Getriebekonstante mit einer zur Eingangswelle parallelen zweiten Vorgelegewelle in Wirkverbindung bringbar ist, welche durch zumindest ein dem ersten Teilgetriebe zugeordnetes Zahnradpaar mit der Ausgangswelle in Wirkverbindung bringbar ist. Durch die zuschaltbare zweite Vorgelegewelle kann ein zusätzlicher Drehmomentpfad geschaffen werden. Ist insbesondere die Ausgangswelle durch ein ein- und ausrückbares Schaltelement zur Bildung eines direkten Getriebegangs mit der Zwischenwelle des ersten Teilgetriebes verbindbar, können vorteilhaft drei Drehmomentpfade zwischen der Eingangswelle und der Ausgangswelle geschaffen werden. Die Drehmomentpfade können wechselweise genutzt werden und insbesondere kann eine Doppelrückschaltung aus dem direkten Getriebegang und eine Doppelhochschaltung auf den direkten Getriebegang unter Last ohne zusätzliches Zahnradpaar ermöglicht werden.

In einer Ausgestaltung der Erfindung wird vorgeschlagen, daß der direkte Getriebegang der höchste Getriebegang ist. Es kann insbesondere bei Fahrten auf Landstraßen und auf Autobahnen bei hohen Geschwindigkeiten ein guter Wirkungsgrad erreicht werden. Verluste durch Zahneingriffe können vermieden werden.

Ein besonders platzsparendes Zahnräderwechselgetriebe mit wenigen Zahnradpaaren und einer hohen Anzahl an Lastschaltmöglichkeiten, insbesondere mit Doppelhoch- und Doppelrückschaltmöglichkeiten unter Last, kann damit erreicht werden, daß die Getriebekonstanten voneinander verschieden sind und zumindest eine Getriebekonstante über beide Vorgelegewellen mit der Ausgangswelle in Wirkverbindung bringbar ist. Sind zumindest zwei Getriebekonstanten mit jeder Vorgelegewelle wirkungsmäßig verbindbar, kann besonders vorteilhaft jedes Zahnradpaar mit zumindest zwei Getriebekonstanten in Wirkverbindung gebracht werden. Jedem Zahnradpaar können zumindest zwei Getriebegänge oder mit mehr als zwei Getriebekonstanten mehr als zwei Getriebegänge zugeordnet werden.

Die Getriebekonstanten können bei verschiedenen, dem Fachmann als geeignet erscheinenden Ausführungsformen mit beiden Vorgelegewellen verbunden werden. Besonders platzsparend und kostengünstig kann dies jedoch mit zwei zueinander konzentrisch angeordneten Vorgelegewellen erreicht werden, die durch ein Schaltelement miteinander wirkungsmäßig verbindbar sind. Das Schaltelement ist dabei vorteilhaft platzsparend auf der den Lastschaltkupplungen zugewandten Seite der zweiten Vorgelegewelle angeordnet.

Die erfindungsgemäße Lösung, daß zumindest eine Getriebekonstante mit beiden Lastschaltkupplungen in Wirkverbindung bringbar ist und die erfindungsgemäße Lösung, daß zumindest eine Vorgelegewelle mit beiden Getriebekonstanten in Wirkverbindung bringbar ist, tragen unabhängig voneinander dazu bei, die Lastschaltmöglichkeiten und den Wirkungsgrad zu erhöhen, Zahnradpaare einzusparen und insbesondere neben einem sequentiellen Schalten unter Last Doppelhochschaltungen und Doppelrückschaltungen unter Last zu ermöglichen. Die Lösungen sind zwar unabhängig voneinander, sie werden jedoch besonders vorteilhaft gemeinsam in einem Zahnräderwechselgetriebe angewendet.

In einer Ausgestaltung wird vorgeschlagen, daß ein dem ersten Teilgetriebe zugeordnetes Zahnradpaar und ein dem zweiten Teilgetriebe zugeordnetes Zahnradpaar einem dem direkten Getriebegang nächst kleineren Getriebegang zugeordnet ist, wodurch insbesondere Doppelrückschaltungen und Doppelhochschaltungen auf und aus diesem Getriebegang und Last ermöglicht werden können. Eine Doppelrückschaltung aus dem dem direkten Getriebegang nächst kleineren Getriebegang wird häufig für Überholvorgänge benötigt und gilt als wichtiger Schaltvorgang.

Der Gangwechsel vom ersten in den zweiten Getriebegang findet häufig unter hoher Last statt. Um einen besonders komfortablen Gangwechsel zu ermöglichen, ist ein Zahnradpaar vorteilhaft dem niedrigsten und dem zweitniedrigsten Getriebegang zugeordnet. In einer Neutralstellung können die Schaltelemente für den zweiten Getriebegang vorgewählt werden, so daß nach dem Anfahren aus dem ersten Getriebegang allein durch eine Überschneidungssteuerung der Lastschaltkupplungen vom ersten in den zweiten Getriebegang geschaltet werden kann.

In einer weiteren Ausgestaltung wird ferner vorgeschlagen, daß das Zahnradpaar von den den Vorwärtsgetriebegängen zugeordneten Zahnradpaaren am nächsten zu einer Wellenlagerung der Ausgangswelle in einem Getriebegehäuse angeordnet ist. Durchbiegung der Wellen und der Verschleiß können reduziert werden.

Um einen geringen Wellenabstand und damit einen kleinen Bauraum des Getriebes und ein kleines Gewicht zu erreichen, ist vorteilhaft ein Zahnrad für den höchsten Getriebegang auf der Vorgelegewelle angeordnet, die einen größeren Durchmesser aufweist als die andere Vorgelegewelle. Der große Durchmesser kann vorteilhaft zur Übersetzung genutzt werden. Ferner kann ein kleiner Wellenabstand und ein kleines Bauvolumen erreicht werden, indem Schaltelemente der Teilgetriebe axial versetzt angeordnet sind. Ein durch die Schaltelemente bedingter, unnötig großer Wellenabstand kann vermieden werden.

In einer vorteilhaften Ausgestaltung für einen breiten Anwendungsbereich sind neben den zwei Getriebekonstanten drei Zahnradpaare für sechs verschiedene Vorwärtsgetriebegänge und ein Zahnradpaar für zumindest einen Rückwärtsgetriebegang angeordnet. Ein Zahnrad des dem vierten und sechsten Getriebegang zugeordneten Zahnradpaars ist auf der zweiten Vorgelegewelle und ein Zahnrad des dem dritten und vierten Getriebegang zugeordneten Zahnradpaars und ein Zahnrad des dem ersten und zweiten Getriebegang zugeordneten Zahnradpaars ist auf der ersten Vorgelegewelle angeordnet.

Eine vorteilhafte Variante besteht ferner darin, daß ein Zahnrad des dem dritten und sechsten Getriebegang zugeordneten Zahnradpaars auf der zweiten Vorgelegewelle und ein Zahnrad des dem zweiten und vierten Getriebegang zugeordneten Zahnradpaars und ein Zahnrad des dem ersten und zweiten Getriebegang zugeordneten Zahnradpaars auf der ersten Vorgelegewelle angeordnet ist. Es kann vorteilhaft eine progressive Stufung des Zahnräderwechselgetriebes und/oder ein erster Getriebegang mit einer hohen Übersetzung erreicht werden, beispielsweise für den Einsatz bei einer Brennkraftmaschine mit einem Turbolader, bei einer Brennkraftmaschine mit einer geringen Leistung und/oder bei einem Geländekraftfahrzeug usw.

Eine vorteilhafte Stufung der Getriebegänge, insbesondere einen großen Übersetzungsunterschied zwischen dem zweiten und dem vierten Getriebegang und/oder mit einer progressiven Kennlinie kann erreicht werden, indem auf der ersten Vorgelegewelle zumindest ein Zahnrad für einen vierten Getriebegang und ein Zahnrad für einen ersten und einen zweiten Getriebegang und auf einer zweiten Vorgelegewelle zumindest ein Zahnrad für einen sechsten und ein Zahnrad für einen dritten Getriebegang angeordnet ist. Dabei können platzsparend viele Lastschaltmöglichkeiten und Freiheitsgrade für eine bestimmte Stufung der Getriebegänge erreicht werden, indem die Zahnräder auf der zweiten Vorgelegewelle für den dritten und den sechsten Getriebegang jeweils als Losrad ausgeführt sind und über ein gemeinsames Schaltelement mit der zweiten Vorgelegewelle wirkungsmäßig verbindbar sind. Ferner können insbesondere beim II bis VI Getriebegang beide Lastschaltkupplungen geschlossen werden. Verluste, insbesondere infolge von Schleppmomenten, und Verschleiß, insbesondere an einem Axiallager einer Kurbelwelle und an einem Ausrücklager der Lastschaltkupplungen können reduziert und die Lebensdauer kann erhöht werden.

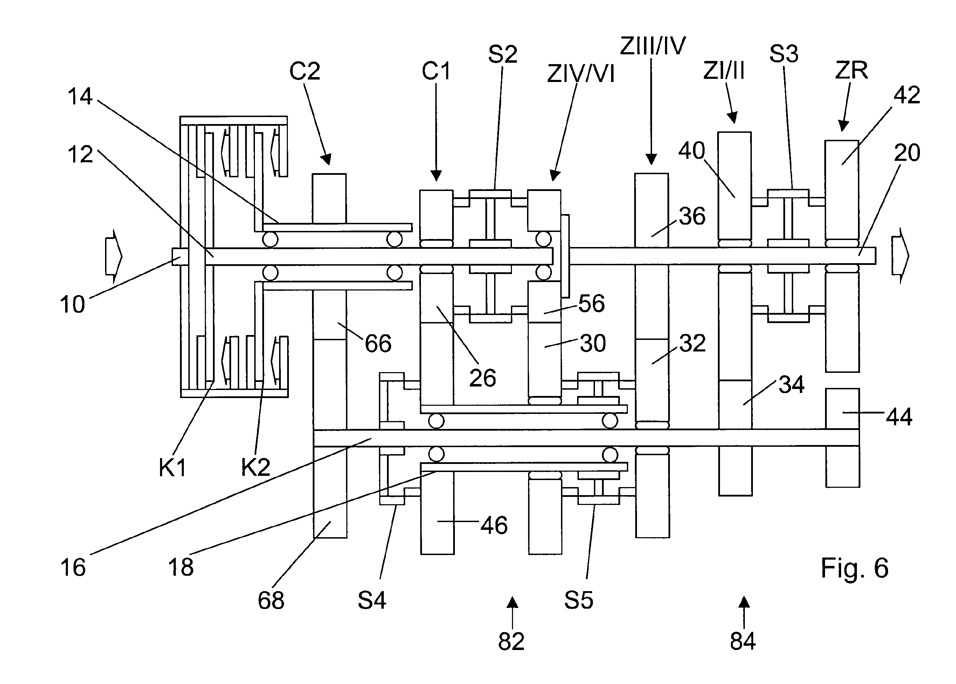

Weitere Vorteile ergeben sich aus der folgenden Zeichnungsbeschreibung. In der Zeichnung sind in Fig. 6 bis Fig. 9 Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:

Fig. 1 schematisch ein Zahnräderwechselgetriebe und Fig. 2, eine Übersicht über mögliche Gangwechsel mit entsprechend geschalteten Schaltelementen, wobei Fig. 1 und Fig. 2 zur Erläuterung der in den Patentansprüchen beanspruchten Ausführungsformen gemäß Fig. 6 bis Fig. 9 dienen,

Fig. 6 eine erfindungsgemäße Variante nach Fig. 1 mit versetzt angeordneten Schaltelementen,

Fig. 7 eine erfindungsgemäße Variante nach Fig. 6 mit einer abweichenden Zuordnung von Zahnradpaaren zu Getriebegängen,

Fig. 8 eine erfindungsgemäße Variante nach Fig. 6 mit einem sechsten direkten Getriebegang und

Fig. 9 eine erfindungsgemäße Variante nach Fig. 1 mit vier schaltbaren Zahnradpaaren für sechs Vorwärtsgetriebegänge.

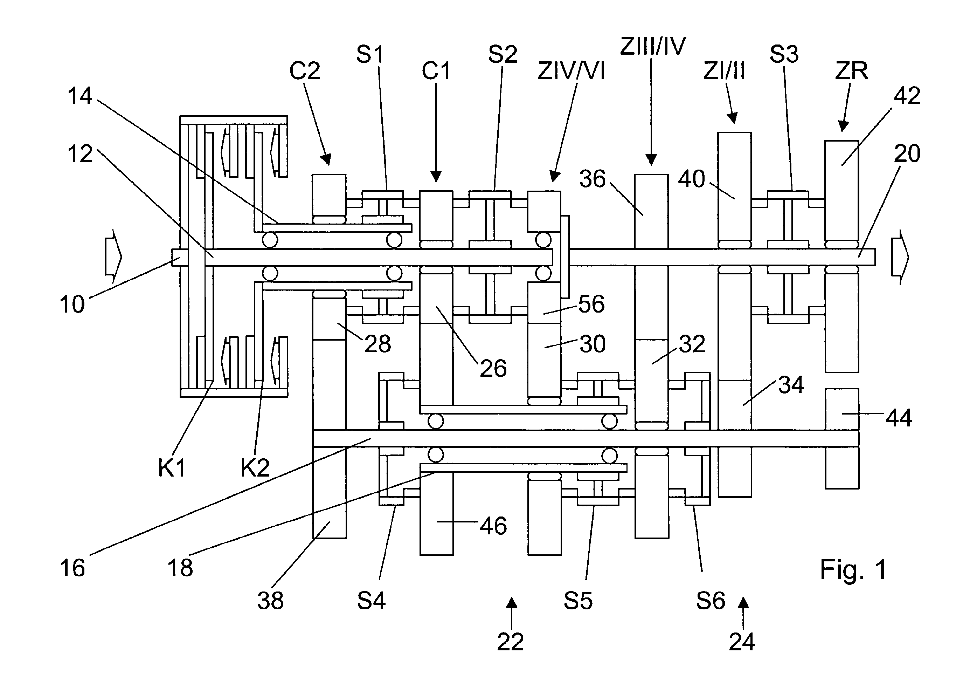

Fig. 1 zeigt ein Zahnräderwechselgetriebe, bei dem eine Eingangswelle 10 mit einer Ausgangswelle 20 durch ein erstes Teilgetriebe 22 und ein zweites Teilgetriebe 24 verbunden ist, die im Kraftfluß parallel zueinander angeordnet sind. Die Teilgetriebe 22, 24 besitzen je eine reibschlüssige Lastschaltkupplung K1, K2 und je eine Zwischenwelle 12, 14. Die Zwischenwellen 12, 14 sind zueinander konzentrisch und zur Eingangswelle 10 koaxial angeordnet und können jeweils über die Lastschaltkupplung K1, K2 mit der Eingangswelle 10 wirkungsmäßig verbunden werden.

Die erste Zwischenwelle 12 des ersten Teilgetriebes 22 ist einerseits mit der Ausgangswelle 20 durch eine ein- und ausrückbare Zahnradkupplung S2 zur Bildung eines direkten fünften Getriebegangs V und andererseits durch die Zahnradkupplung S2 über eine erste Getriebekonstante C1 mit einer zur Ausgangswelle 20 parallelen, als Hohlwelle ausgeführten Vorgelegewelle 18 wirkungsmäßig verbindbar.

Die Vorgelegewelle 18 des ersten Teilgetriebes 22 ist durch ein Zahnradpaar ZIV/VI zur Bildung des höchsten und des zweithöchsten Getriebegangs IV, VI mit der Ausgangswelle 20 verbunden. Die zweite Vorgelegewelle 18 besitzt einen größeren Durchmesser als die erste Vorgelegewelle 16. Der große Durchmesser wird vorteilhaft zur Übersetzung genutzt, und zwar insbesondere für den höchsten Getriebegang VI.

Das Zahnradpaar ZIV/VI besitzt ein mit der Ausgangswelle 20 drehfest verbundenes Festrad 56, das mit einem Losrad 30 kämmt. Das Losrad 30 ist konzentrisch und drehbar auf der Vorgelegewelle 18 angeordnet und mit der Vorgelegewelle 18 durch eine ein- und ausrückbare Zahnradkupplung S5 kuppelbar. Im Festrad 56 ist die Zwischenwelle 12 gelagert, wodurch insbesondere Baulänge eingespart werden kann.

Ferner ist die Vorgelegewelle 18 des ersten Teilgetriebes 22 über ein Zahnradpaar ZIII/IV zur Bildung des dritten und des vierten Getriebegangs III, IV mit der Ausgangswelle 20 wirkungsmäßig verbindbar. Das Zahnradpaar ZIII/IV besitzt ein Festrad 36, das auf der Ausgangswelle 20 konzentrisch und drehfest angeordnet ist und ein Losrad 32, das konzentrisch und drehbar auf einer weiteren zur Ausgangswelle 20 parallelen Vorgelegewelle 16 angeordnet ist. Das Losrad 32 ist über die ein- und ausrückbare Zahnradkupplung S5 mit der Vorgelegewelle 18 und mit einer Zahnradkupplung S6 mit der Vorgelegewelle 16 kuppelbar.

Die zweite als Hohlwelle ausgebildete Zwischenwelle 14 des zweiten Teilgetriebes 24 ist über eine zweite Getriebekonstante C2 mit der Vorgelegewelle 16 verbunden, die die Vorgelegewelle 18 des ersten Teilgetriebes 22 mit Spiel durchsetzt. Die zweite Getriebekonstante C2 besitzt ein auf der Zwischenwelle 14 konzentrisch und drehbar angeordnetes Losrad 28, das über eine Zahnradkupplung S1 mit der Zwischenwelle 14 kuppelbar ist, und ein mit der Vorgelegewelle 16 konzentrisch und drehfest verbundenes Festrad 38. Die dem zweiten Teilgetriebe 24 angehörige Vorgelegewelle 16 ist über das Zahnradpaar ZIII/IV für den dritten und vierten Getriebegang III, IV, über ein Zahnradpaar ZI/II für den ersten und den zweiten Getriebegang I, II und über ein Zahnradpaar ZR für zwei Rückwärtsgetriebegänge R mit der Ausgangswelle 20 verbunden. Ein Rückwärtsgetriebegang kann beispielsweise für einen Winterbetrieb und ein Rückwärtsgang kann beispielsweise für einen Sommerbetrieb ausgelegt werden. Das Zahnradpaar ZI/II für den ersten und den zweiten Getriebegang I, II besitzt ein auf der Ausgangswelle 20 konzentrisch und drehbar angeordnetes Losrad 40, das mit einer Zahnradkupplung S3 mit der Ausgangswelle 20 kuppelbar ist, und ein auf der Vorgelegewelle 16 konzentrisch und drehfest angeordnetes Festrad 34.

Das Zahnradpaar ZR für die Rückwärtsgetriebegänge R besitzt ein auf der Ausgangswelle 20 konzentrisch und drehbar angeordnetes Losrad 42, das durch die ein- und ausrückbare Zahnradkupplung S3 mit der Ausgangswelle 20 kuppelbar ist, und ein Festrad 44, das konzentrisch und drehfest mit der Vorgelegewelle 16 verbunden ist. Zwischen dem Losrad 42 und dem Festrad 44 des Zahnradpaars ZR ist ein nicht näher dargestelltes Zahnrad zur Drehsinnumkehr angeordnet.

Die erste Getriebekonstante C1 weist ein auf der Vorgelegewelle 16 konzentrisch und drehfest angeordnetes Festrad 46 auf, das mit einem auf der Zwischenwelle 12 des ersten Teilgetriebes 22 konzentrisch und drehbar angeordneten Losrad 26 kämmt. Das Losrad 26 kann durch die ein- und ausrückbare Zahnradkupplung S2 mit der Zwischenwelle 12 des ersten Teilgetriebes 22 und durch die Zahnradkupplung S1 mit der Zwischenwelle 14 des zweiten Teilgetriebes 24 verbunden werden. Die zweite Lastschaltkupplung K2 bzw. die zweite Zwischenwelle 14 ist dadurch neben der zweiten Getriebekonstanten C2 mit der ersten Getriebekonstanten C1 wirkungsmäßig verbindbar. Die erste Getriebekonstante C1 kann durch die Zahnradkupplungen S1 und S2 wahlweise mit der ersten, der zweiten oder mit beiden Lastschaltkupplungen K1, K2 in Wirkverbindung gebracht werden.

Ferner kann die Zwischenwelle 14 des zweiten Teilgetriebes 24 über die zweite Getriebekonstante C2 durch eine ein- und ausrückbare Zahnradkupplung S4 mit dem Festrad 46 der Getriebekonstanten C1 und damit mit der Vorgelegewelle 18 des ersten Teilgetriebes 22 und über das dem ersten Teilgetriebe 22 zugeordneten Zahnradpaar ZIV/VI mit der Ausgangswelle 20 wirkungsmäßig verbunden werden. Die Zahnradkupplung S4 ist auf der den Lastschaltkupplungen K1, K2 zugewandten Seite der zweiten Vorgelegewelle 18 angeordnet. Die Zwischenwelle 12 kann über die erste Getriebekonstante C1 vorteilhaft durch die ein- und ausrückbare Zahnradkupplung S4 mit der Vorgelegewelle 16 und über die dem zweiten Teilgetriebe 24 zugeordneten Zahnradpaare ZI-II/IV, ZI/II, ZR mit der Ausgangswelle 20 wirkungsmäßig verbunden werden. Mit jeder Getriebekonstanten C1 und C2 kann jeweils über jedes Zahnradpaar ZI/II, ZIII/IV, ZIV/VI, ZR auf die Ausgangswelle 20 abgetrieben werden. Die Getriebekonstanten C1 und C2 sind verschieden, so daß jedes Zahnradpaar ZI/II, ZIII/IV, ZIV/VI, ZR zwei Getriebegängen zugeordnet ist.

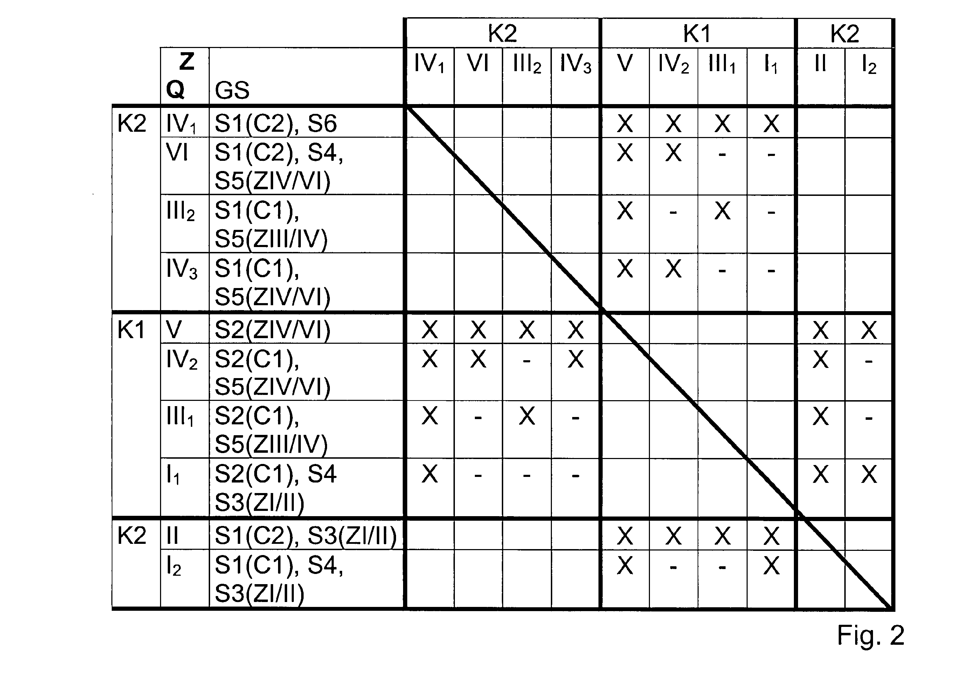

In Fig. 2 ist eine Übersicht über mögliche Gangwechsel unter Last jeweils von einem Quellgang Q zu einem Zielgang Z dargestellt. Die möglichen Gangwechsel sind mit X gekennzeichnet. Unter GS sind jeweils die geschalteten Zahnradkupplungen aufgeführt. Sind neben einer Neutralstellung der Zahnradkupplung zwei Schaltstellungen möglich, ist jeweils zu der Zahnradkupplung die gekuppelte Getriebekonstante bzw. das gekuppelte Zahnradpaar genannt. Mit den zwei Getriebekonstanten C1 und C2 und den drei Zahnradpaaren ZI/II, ZIII/IV, ZIV/VI können sechs verschiedene Vorwärtsgetriebegänge I, II, III, IV, V, VI erreicht werden, wobei der erste Getriebegang I_{1,2} zweimal, der dritte Getriebegang III_{1, 2} zweimal und der vierte Getriebegang IV_{1, 2, 3} dreimal vorkommt.

In Fig. 2 ist eine Übersicht über mögliche Gangwechsel unter Last jeweils von einem Quellgang Q zu einem Zielgang Z dargestellt. Die möglichen Gangwechsel sind mit X gekennzeichnet. Unter GS sind jeweils die geschalteten Zahnradkupplungen aufgeführt. Sind neben einer Neutralstellung der Zahnradkupplung zwei Schaltstellungen möglich, ist jeweils zu der Zahnradkupplung die gekuppelte Getriebekonstante bzw. das gekuppelte Zahnradpaar genannt. Mit den zwei Getriebekonstanten C1 und C2 und den drei Zahnradpaaren ZI/II, ZIII/IV, ZIV/VI können sechs verschiedene Vorwärtsgetriebegänge I, II, III, IV, V, VI erreicht werden, wobei der erste Getriebegang I_{1,2} zweimal, der dritte Getriebegang III_{1, 2} zweimal und der vierte Getriebegang IV_{1, 2, 3} dreimal vorkommt.

### Gangwechsel I₁-II

Beim Anfahren mit der ersten Lastschaltkupplung K1 aus dem ersten Getriebegang I₁ kuppelt die Zahnradkupplung S2 das Losrad 26 der ersten Getriebekonstanten C1 mit der Zwischenwelle 12, die Zahnradkupplung S4 kuppelt das Festrad 46 der ersten Getriebekonstanten C1 mit der Vorgelegewelle 16 und die Zahnradkupplung S3 kuppelt das Losrad 40 des Zahnradpaars ZI/II mit der Ausgangswelle 20. Der Kraftfluß verläuft von der Eingangswelle 10 über die erste Lastschaltkupplung K1, die Zwischenwelle 12, die Zahnradkupplung S2, die Getriebekonstante C1, die Zahnradkupplung S4, die Vorgelegewelle 16, das Zahnradpaar ZI/II und über die Zahnradkupplung S3 zur Ausgangswelle 20.

Die Zahnradkupplung S1 kuppelt vorteilhaft bereits vor dem Anfahren aus dem ersten Getriebegang I₁ bzw. in einer Neutralstellung des Zahnräderwechselgetriebes das Losrad 28 der zweiten Getriebekonstanten C2 mit der Zwischenwelle 14, so daß allein durch eine Überschneidungssteuerung von der Lastschaltkupplung K1 auf die Lastschaltkupplung K2 bzw. durch ein gleichzeitiges Auskuppeln der ersten und Einkuppeln der zweiten Lastschaltkupplung K2 vom ersten in den zweiten Getriebegang I₁-II unter Last geschaltet werden kann. Im zweiten Getriebegang II verläuft der Kraftfluß von der Eingangswelle 10 über die zweite Lastschaltkupplung K2, die Zwischenwelle 14, die Zahnradkupplung S1, die Getriebekonstante C2, die Vorgelegewelle 16, das Zahnradpaar ZI/II und über die Zahnradkupplung S3 zur Ausgangswelle 20. Die Zahnradkupplungen S2 und S4 können im zweiten Getriebegang II ohne Last ausgekuppelt werden.

### Gangwechsel II-III₁

Zum Schalten vom zweiten in den dritten Getriebegang III₁ wird das Losrad 26 der Getriebekonstanten C1 durch die Zahnradkupplung S2 mit der Zwischenwelle 12 und das Losrad 32 des Zahnradpaars ZIII/IV durch die Zahnradkupplung S5 mit der Vorgelegewelle 18 gekuppelt. Mit einer Überschneidungssteuerung von der Lastschaltkupplung K2 auf die Lastschaltkupplung K1 wird unter Last vom zweiten in den dritten Getriebegang II-III₁ geschaltet. Im dritten Getriebegang III₁ verläuft der Kraftfluß von der Eingangswelle 10 über die erste Lastschaltkupplung K1, die Zwischenwelle 12, die Zahnradkupplung S2, die Getriebekonstante C1, die Vorgelegewelle 18, die Zahnradkupplung S5 und über das Zahnradpaar ZIII/IV zur Ausgangswelle 20. Die Zahnradkupplungen S1 und S3 können ohne Last ausgekuppelt werden.

### Gangwechsel III₁-IV₁

Zum Schalten aus dem dritten in den vierten Getriebegang III₁-IV₁ wird das Losrad 28 der Getriebekonstanten C2 durch die Zahnradkupplung S1 mit der Zwischenwelle 14 und das Losrad 32 des Zahnradpaars ZIII/IV mit der Vorgelegewelle 16 gekuppelt. Mit einer Überschneidungssteuerung von der Lastschaltkupplung K1 auf die Lastschaltkupplung K2 wird vom dritten in den vierten Getriebegang III₁-IV₁ unter Last geschaltet. Der Kraftfluß verläuft im vierten Getriebegang IV₁ von der Eingangswelle 10 über die zweite Lastschaltkupplung K2, die Zwischenwelle 14, die Zahnradkupplung S1, die Getriebekonstante C2, die Vorgelegewelle 16, die Zahnradkupplung S6 und über das Zahnradpaar ZIII/IV zur Ausgangswelle 20. Die Zahnradkupplungen S2 und S5 können ohne Last ausgekuppelt werden.

### Gangwechsel IV₁-V

Zum Schalten vom vierten Getriebegang IV₁ in den fünften Getriebegang V wird die Zwischenwelle 12 durch die Zahnradkupplung S2 mit dem Festrad 56 des Zahnradpaars ZIV/VI und damit mit der Ausgangswelle 20 gekuppelt. Durch eine Überschneidungssteuerung von der Lastschaltkupplung K2 auf die Lastschaltkupplung K1 wird vom vierten in den fünften Getriebegang IV₁-V unter Last geschaltet. Der Kraftfluß im fünften Getriebegang V verläuft von der Eingangswelle 10 über die erste Lastschaltkupplung K1, die Zwischenwelle 12, die Zahnradkupplung S2 und über das Festrad 56 des Zahnradpaars ZIV/VI zur Ausgangswelle 20. Die Zahnradkupplungen S1 und S6 können ohne Last ausgekuppelt werden.

### Gangwechsel V-VI

Zum Schalten vom fünften in den sechsten Getriebegang V-VI, wird das Losrad 28 der Getriebekonstanten C2 durch die Zahnradkupplung S1 mit der Zwischenwelle 14, die Vorgelegewelle 16 durch die Zahnradkupplung S4 mit dem Festrad 46 der Getriebekonstanten C1 und das Losrad 30 des Zahnradpaars ZIV/VI durch die Zahnradkupplung S5 mit der Vorgelegewelle 18 gekuppelt. Durch eine Überschneidungssteuerung von der Lastschaltkupplung K1 auf die Lastschaltkupplung K2 wird vom fünften in den sechsten Getriebegang V-VI unter Last geschaltet. Der Kraftfluß verläuft im sechsten Getriebegang VI von der Eingangswelle 10 über die zweite Lastschaltkupplung K2, die Zwischenwelle 14, die Zahnradkupplung S4, die Vorgelegewelle 18, die Zahnradkupplung S5 und über das Zahnradpaar ZIV/VI zur Ausgangswelle 20. Die Zahnradkupplung S2 kann ohne Last ausgekuppelt werden.

Entsprechend dem sequentiellen Hochschalten vom ersten bis zum sechsten Getriebegang I₁-VI kann sequentiell vom sechsten bis zum ersten Getriebegang VI-I₁ unter Last zurückgeschaltet werden.

### Rückwärtsgetriebegang R

In einem Rückwärtsgetriebegang R ist die Lastschaltkupplung K2 geschlossen, die Zahnradkupplung S1 kuppelt das Losrad 28 der Getriebekonstanten C2 mit der Zwischenwelle 14 und die Zahnradkupplung S3 kuppelt das Losrad 42 des Zahnradpaars ZR mit der Ausgangswelle 20. Der Kraftfluß verläuft von der Eingangswelle 10 über die Lastschaltkupplung K2, die Zwischenwelle 14, die Zahnradkupplung S1, die Getriebekonstante C2, die Vorgelegewelle 16, das Zahnradpaar ZR und über die Zahnradkupplung S3 zur Ausgangswelle 20. Daneben kann auch ein zweiter Rückwärtsgetriebegang mit der Getriebekonstanten C1 geschaltet werden.

### Gangwechsel I_{1,2}-II

Anstatt allein mit der ersten Lastschaltkupplung K1, kann gemeinsam mit der ersten und der zweiten Lastschaltkupplung K2 oder auch allein mit der zweiten Lastschaltkupplung K2 aus dem ersten Getriebegang I₂ angefahren werden. Beim Anfahren aus dem ersten Getriebegang I_{1, 2} mit beiden Lastschaltkupplungen K1, K2 sind beide Lastschaltkupplungen K1, K2 geschlossen. Die Zahnradkupplung S1 kuppelt die Zwischenwelle 14 und die Zahnradkupplung S2 kuppelt die Zwischenwelle 12 mit dem Losrad 26 der Getriebekonstanten C1. Die Zahnradkupplung S4 kuppelt die Getriebekonstante C1 mit der Vorgelegewelle 16 und die Zahnradkupplung S3 kuppelt das Losrad 40 des Zahnradpaars ZI/II mit der Ausgangswelle 20. Der Kraftfluß läuft von der Eingangswelle 10 über die Lastschaltkupplungen K1, K2, über die Zwischenwellen 12, 14, über die Zahnradkupplungen S1 S2, die Getriebekonstante C1, die Zahnradkupplung S4, die Vorgelegewelle 16, das Zahnradpaar ZI/II und über die Zahnradkupplung S3 zur Ausgangswelle 20. Sinkt die Differenzdrehzahl in den Lastschaltkupplungen K1, K2 auf Null, wird die Lastschaltkupplung K2 geöffnet.

Wird allein mit der zweiten Lastschaltkupplung K2 aus dem ersten Getriebegang I₂ angefahren, kann durch Übergabe an die Lastschaltkupplung K1 ohne Zugkraftunterbrechung oder direkt mit Zugkraftunterbrechung in den zweiten Getriebegang II geschaltet werden.

### Gangwechsel II-IV₂, IV₂-II

Zum Doppelhochschalten aus dem zweiten in den vierten Getriebegang II-IV₂ wird das Losrad 26 der Getriebekonstanten C1 durch die Zahnradkupplung S2 mit der Zwischenwelle 12 und das Losrad 30 des Zahnradpaars ZIV/VI durch die Zahnradkupplung S5 mit der Vorgelegewelle 18 gekuppelt. Durch Überschneidungssteuerung von der Lastschaltkupplung K2 auf die Lastschaltkupplung K1 kann vom zweiten in den vierten Getriebegang II-IV₂ unter Last geschaltet werden. Der Kraftfluß verläuft im vierten Getriebegang IV₂ von der Eingangswelle 10 über die erste Lastschaltkupplung K1, die Zwischenwelle 12, die Zahnradkupplung S2, die Getriebekonstante C1, die Vorgelegewelle 18, die Zahnradkupplung S5 und über das Zahnradpaar ZIV/VI zur Ausgangswelle 20. Die Zahnradkupplungen S1 und S3 können ohne Last ausgekuppelt werden. Entsprechend kann vom vierten Getriebegang IV₂ in den zweiten Getriebegang II unter Last zurückgeschaltet werden.

Nach dem Hochschalten vom zweiten in den vierten Getriebegang II-IV₂ kann wahlweise über zwei verschiedene vierte Getriebegänge IV_{1,3}, bei denen jeweils die zweite Lastschaltkupplung K2 geschlossen ist, in den fünften Getriebegang V unter Last geschaltet werden. Neben den zwei bereits beschriebenen vierten Getriebegängen IV_{1, 2} ist bei dem noch verbleibenden vierten Getriebegang IV₃ die Lastschaltkupplung K2 geschlossen. Die Zahnradkupplung S1 kuppelt das Losrad 26 der Getriebekonstanten C1 mit der Zwischenwelle 14 und die Zahnradkupplung S5 kuppelt das Losrad 30 des Zahnradpaars ZIV/VI mit der Vorgelegewelle 18. Der Kraftfluß verläuft von der Eingangswelle 10 über die zweite Lastschaltkupplung K2, die Zwischenwelle 14, die Zahnradkupplung S1 die Getriebekonstante C1, die Vorgelegewelle 18, die Zahnradkupplung S5 und über das Zahnradpaar ZIV/VI zur Ausgangswelle 20.

### Gangwechsel IV₂-VI, VI-IV₂

Wird vom vierten Getriebegang IV₁, 3 in den sechsten Getriebegang VI hochgeschaltet, wird - falls dieser nicht bereits geschaltet ist - zuerst in den vierten Getriebegang IV₂ unter Last geschaltet, bei dem die erste Lastschaltkupplung K1 geschlossen ist. Anschließend kann durch Überschneidungssteuerung von der Lastschaltkupplung K1 auf K2 vom vierten Getriebegang IV₂ unter Last in den sechsten Getriebegang VI hochgeschaltet werden. Entsprechend kann vom sechsten Getriebegang VI in den vierten Getriebegang IV₂ unter Last zurückgeschaltet werden.

Vom Getriebegang IV₁ und IV₃ kann jeweils unter Last auf den vierten Getriebegang IV₂ geschaltet werden und umgekehrt. Von dem Getriebegang IV₁ kann unter Last über IV₂ auf IV₃ und von IV₃ kann unter Last über IV₂ auf IV₁ geschaltet werden. Vor einem Schalten aus dem vierten Getriebegang IV_{1, 2, 3} in einen Zielgang wird stets der vierte Getriebegang IV_{1, 2, 3} gewählt, von dem aus ein Schalten in den Zielgang unter Last möglich ist.

### Gangwechsel III₂-V, V-III₂

Zum Schalten aus dem dritten Getriebegang III₁ in den fünften Getriebegang V wird zuerst unter Last in den dritten Getriebegang III₂ geschaltet. Das Losrad 26 der ersten Getriebekonstanten C1 wird durch die Zahnradkupplung S1 mit der Zwischenwelle 14 gekuppelt. Durch Überschneidungssteuerung von der Lastschaltkupplung K1 auf die Lastschaltkupplung K2 wird unter Last vom dritten Getriebegang III₁ in den dritten Getriebegang III₂ geschaltet. Der Kraftfluß verläuft im dritten Getriebegang III₂ von der Eingangswelle 10 über die zweite Lastschaltkupplung K2, die Zwischenwelle 14, die Zahnradkupplung S1, die Getriebekonstante C1, die Vorgelegewelle 18, die Zahnradkupplung S5 und über das Zahnradpaar ZIII/IV zur Ausgangswelle 20. Die Zahnradkupplung S2 kann ohne Last ausgekuppelt werden. Anschließend kann unter Last in den fünften Getriebegang V geschaltet werden.

Entsprechend kann vom fünften Getriebegang V unter Last in den dritten Getriebegang III₂ und vom dritten Getriebegang III₂ unter Last in den dritten Getriebegang III₁ geschaltet werden.

Neben den beschriebenen Gangwechsel kann von IV₁ nach I₁, von V nach IV₃, II und I₂, von I nach IV₁ und I₂, von II nach V und von I₂ nach V geschaltet werden.

In den Fig. 6 bis 9 sind die erfindungsgemäßen Ausführungsbeispiele dargestellt. Nachfolgend werden Unterschiede zu den bereits beschriebenen Ausführungsbeispielen in den Fig. 1 und 2 beschrieben. Bezüglich gleichbleibender Bauteile und Funktionen kann auf die Beschreibung zu den Ausführungsbeispielen in Fig. 1 und 2 verwiesen werden.

Das Ausführungsbeispiel in Fig. 6 besitzt zwei Teilgetriebe 82, 84 mit versetzt angeordneten Schaltelement S2, S3, S4, S5, und zwar wurden gegenüber dem Ausführungsbeispiel in Fig. 1 die Zahnradkupplungen S1 und S6 eingespart, wodurch das Zahnräderwechselgetriebe axial und radial besonders klein baut. Die Getriebekonstante C2 besitzt zwei Festräder 66, 68. Die Zuordnung der Zahnradpaare ZI/II, ZIII/IV, ZVI/VI zu den Getriebegängen I-VI entspricht der in Fig. 1.

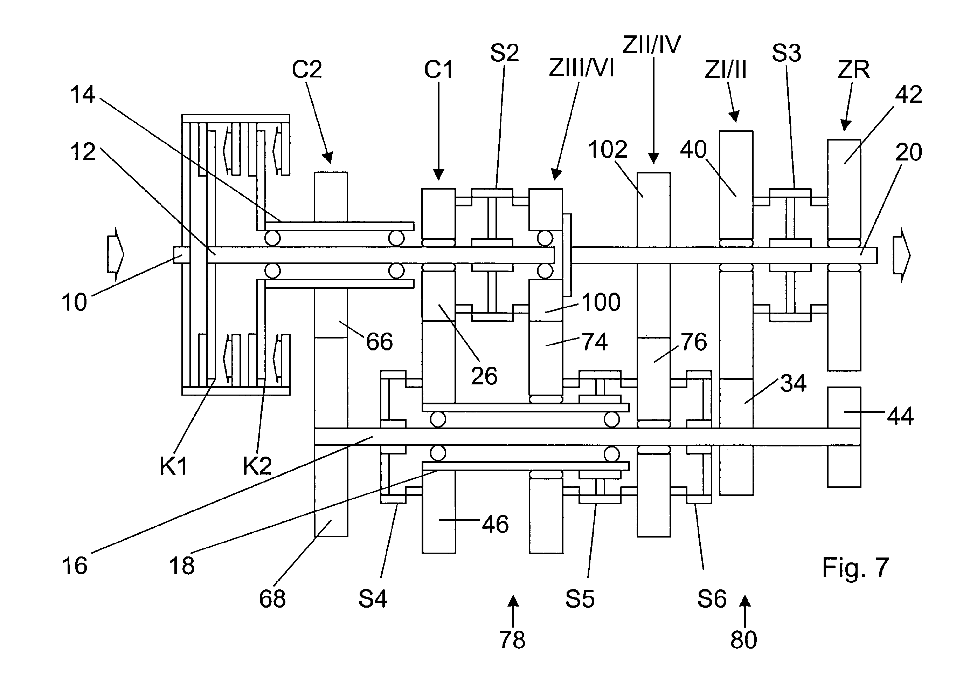

Fig. 7 zeigt ein Zahnräderwechselgetriebe mit zwei Teilgetrieben 78, 80 mit versetzt angeordneten Zahnradkupplungen S2, S3, S4, S5, S6. Gegenüber dem Zahnräderwechselgetriebe in Fig. 1 wurde die Zahnradkupplung S1 eingespart. Die Getriebekonstante C2 besitzt zwei Festräder 66, 68. Die Zuordnung der Zahnradpaare ZI/II, ZII/IV, ZIII/VI zu den Getriebegängen I-VI entspricht der in Fig. 4.

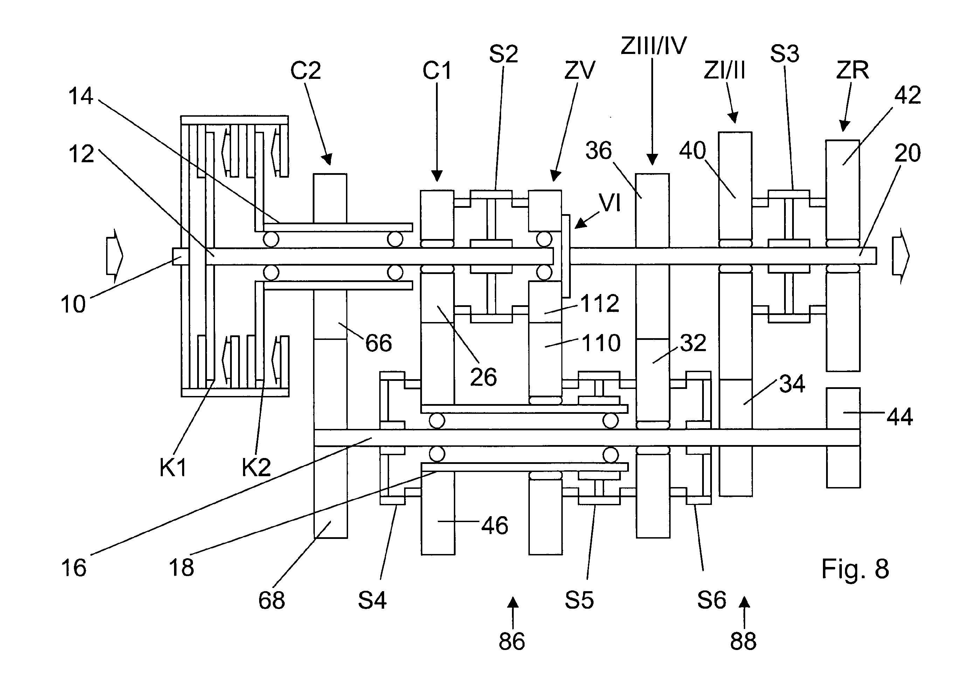

In Fig. 8 ist ein Zahnräderwechselgetriebe mit zwei Teilgetrieben 86, 88 dargestellt, deren Zahnradkupplungen S2, S3, S4, S5, S6 entsprechend dem Zahnräderwechselgetriebe in Fig. 7 angeordnet sind. Die Zuordnung der Zahnradpaare ZI/II, ZIII/IV, ZV entspricht der in Fig. 5. Der höchste Getriebegang VI ist als direkter Getriebegang VI ausgeführt.

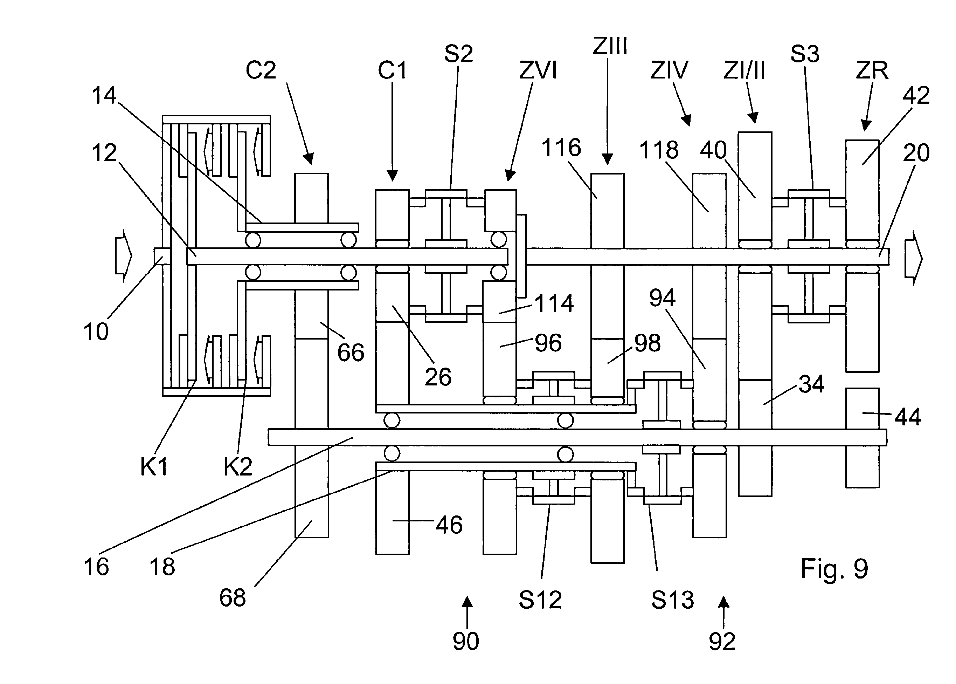

Das in Fig. 9 dargestellte Ausführungsbeispiel besitzt ein Teilgetriebe 92 mit einem auf der ersten Vorgelegewelle 16 angeordneten Zahnrad 94 für den vierten Getriebegang IV und ein Zahnrad 34 für den ersten und zweiten Getriebegang I, II. Ferner besitzt das Zahnräderwechselgetriebe ein Teilgetriebe 90 mit einem auf der zweiten Vorgelegewelle 18 angeordneten Zahnrad 96 für den sechsten Getriebegang VI und ein Zahnrad 98 für den dritten Getriebegang III. Das Teilgetriebe 90 besitzt zwei Zahnradpaare ZIII, ZVI für den dritten und den sechsten Getriebegang III, VI, und das Teilgetriebe 92 besitzt ein Zahnradpaar ZI/II, für den ersten und zweiten Getriebegang I, II und ein Zahnradpaar ZIV für den vierten Getriebegang IV.

Die Zahnräder 96, 98 auf der zweiten Vorgelegewelle 18 für den dritten und den sechsten Getriebegang III, VI sind jeweils als Losrad ausgeführt und sind über ein gemeinsames Schaltelement S12 mit der zweiten Vorgelegewelle 18 wirkungsmäßig verbindbar. Die Zahnräder 96, 98 kämmen jeweils mit einem auf der Ausgangswelle 20 angeordneten Festrad 114, 116.

Zwischen der zweiten Vorgelegewelle 18 und dem Zahnradpaar ZIV ist eine Zahnradkupplung S13 auf der ersten Vorgelegewelle 16 angeordnet, über die die erste Vorgelegewelle 16 mit der zweiten Vorgelegewelle 18 und das auf der ersten Vorgelegewelle 16 angeordnete Losrad 94 des Zahnradpaars ZIV mit der ersten Vorgelegewelle 16 kuppelbar ist. Das Losrad 94 kämmt mit einem auf der Ausgangswelle 20 angeordneten Festrad 118. Gegenüber dem Zahnräderwechselgetriebe in Fig. 1 entfallen die Zahnradkupplungen S1, S4, S5 und S6 bzw. werden die Zahnradkupplungen S4 und S6 (Fig. 1) zu der platzsparenden Zahnradkupplung S13 zusammengefaßt. Die Getriebekonstante C2 zwei Festräder 66, 68. Die Getriebekonstanten C1, C2 sind mit einem kleinen axialen Abstand angeordnet, wodurch axialer Bauraum eingespart wird. Die Schaltelement S2, S3, S12, S13 sind axial versetzt angeordnet, wodurch radialer Bauraum eingespart wird. Drei freie Getriebegänge können für Mehrfachschaltungen genutzt werden.

### Bezugszeichen

- K1: Lastschaltkupplung
- K2: Lastschaltkupplung
- C1: Getriebekonstante
- C2: Getriebekonstante
- C3: Getriebekonstante
- C4: Getriebekonstante
- ZI: Zahnradpaar
- ZII/III: Zahnradpaar
- ZI/II: Zahnradpaar
- ZIII/IV: Zahnradpaar
- ZIV/VI: Zahnradpaar
- ZR: Zahnradpaar
- S1: Schaltelement
- S2: Schaltelement
- S3: Schaltelement
- S4: Schaltelement
- S5: Schaltelement
- S6: Schaltelement
- S7: Schaltelement
- S8: Schaltelement
- S9: Schaltelement
- S10: Schaltelement
- S11: Schaltelement
- S12: Schaltelement
- S13: Schaltelement
- GS: Geschaltete Schaltelemente
- I: Getriebegang
- II: Getriebegang
- III: Getriebegang
- IV: Getriebegang
- V: Getriebegang
- VI: Getriebegang
- R: Rückwärtsgetriebegang
- Q: Quellgang
- Z: Zielgang
- 10: Eingangswelle
- 12: Zwischenwelle
- 14: Zwischenwelle
- 16: Vorgelegewelle
- 18: Vorgelegewelle
- 20: Ausgangswelle
- 22: Teilgetriebe
- 24: Teilgetriebe
- 26: Zahnrad
- 28: Zahnrad
- 30: Zahnrad
- 32: Zahnrad
- 34: Zahnrad
- 36: Zahnrad
- 38: Zahnrad
- 40: Zahnrad
- 42: Zahnrad
- 44: Zahnrad
- 46: Zahnrad
- 48: Zahnrad
- 50: Zahnrad
- 52: Teilgetriebe
- 54: Teilgetriebe
- 56: Zahnrad
- 58: Zahnrad
- 60: Zahnrad
- 62: Zahnrad
- 64: Zahnrad
- 66: Zahnrad
- 68: Zahnrad
- 70: Zahnrad
- 72: Zahnrad
- 74: Zahnrad
- 76: Zahnrad
- 78: Teilgetriebe
- 80: Teilgetriebe
- 82: Teilgetriebe
- 84: Teilgetriebe
- 86: Teilgetriebe
- 88: Teilgetriebe
- 90: Teilgetriebe
- 92: Teilgetriebe
- 94: Zahnrad
- 96: Zahnrad
- 98: Zahnrad
- 100: Zahnrad
- 102: Zahnrad
- 104: Teilgetriebe
- 106: Teilgetriebe
- 108: Teilgetriebe
- 110: Zahnrad
- 112: Zahnrad
- 114: Zahnrad
- 116: Zahnrad
- 118: Zahnrad

## Patentansprüche

1. Zahnräderwechselgetriebe, bei dem eine Eingangswelle (10 bzw. 12) mit einer Ausgangswelle (20) durch zumindest ein erstes und ein zweites Teilgetriebe (82 u. 84, 78 u. 80, 86 u. 88, 90 u. 92) verbunden ist, die im Kraftfluß parallel zueinander angeordnet sind und je eine reibschlüssige Lastschaltkupplung (K1 u. K2) und je eine Zwischenwelle (12 u. 14) aufweisen, wobei jeweils die Zwischenwelle (12 bzw. 14) über die Lastschaltkupplung (K1 bzw. K2) mit der Eingangswelle (10 bzw. 12) wirkungsmäßig verbindbar ist, und mit je Teilgetriebe (82 bzw. 84, 78 bzw. 80, 86 bzw. 88, 90 bzw. 92) zumindest einer Getriebekonstanten (C1 bzw. C2), die jeweils ein Zahnrad auf einer der beiden Zwischenwellen (12 u. 14) aufweisen, von denen zumindest eines mit einer ersten parallel zur Eingangswelle (10 bzw. 12) angeordneten Vorgelegewelle (18 bzw. 16) wirkungsmäßig verbindbar ist, **wobei** die Lastschaltkupplung (K1) des ersten Teilgetriebes (82, 78, 86, 90) über die erste Getriebekonstante (C1) mit einer zur Eingangswelle (10) parallelen zweiten Vorgelegewelle (18) in Wirkverbindung bringbar ist, welche durch zumindest ein dem ersten Teilgetriebe (82, 78, 86, 90) zugeordnetes Zahnradpaar (ZIV/VI, ZIII/VI, ZV, ZI-II) mit der Ausgangswelle (20) in Wirkverbindung bringbar ist, **wobei** die erste Getriebekonstante (C1) ein auf der Vorgelegewelle (18) konzentrisch und drehfest angeordnetes Festrad (46) aufweist, das mit einem auf der Zwischenwelle (12) des ersten Teilgetriebes (82, 78, 86, 90) konzentrisch und drehbar angeordneten Losrad (26) kämmt, wohingegen die andere Getriebekonstante (C2) zwei Festräder (66, 68) besitzt.

2. Zahnräderwechselgetriebe nach Anspruch 1,
**dadurch gekennzeichnet,**
**daß** die Ausgangswelle (20) durch zumindest ein ein- und ausrückbares Schaltelement (S2, S7) zur Bildung eines direkten Getriebegangs (V, VI) mit wenigstens einer Zwischenwelle (12) eines Teilgetriebes (22, 52, 78, 80, 82, 84, 86, 88, 90, 92, 104, 106) verbindbar ist.

3. Zahnräderwechselgetriebe nach Anspruch 2,
**dadurch gekennzeichnet,**
**daß** der direkte Getriebegang (VI) der höchste Getriebegang (VI) ist.

4. Zahnräderwechselgetriebe nach einem der Ansprüche 1 bis 3,
**dadurch gekennzeichnet,**
**daß** die Getriebekonstanten (C1, C2) voneinander verschieden sind und zumindest eine Getriebekonstante (C1, C2) über beide Vorgelegewellen (16, 18) mit der Ausgangswelle (20) in Wirkverbindung bringbar ist.

5. Zahnräderwechselgetriebe nach einem der Ansprüche 1 bis 4,
**dadurch gekennzeichnet,**
**daß** ein Zahnradpaar (ZR) für einen Rückwärtsgetriebegang (R) mit zumindest zwei Getriebekonstanten (C1, C2) in Wirkverbindung bringbar ist.

6. Zahnräderwechselgetriebe nach Anspruch 5,
**dadurch gekennzeichnet,**
**daß** jedes Zahnradpaar (ZI/II, ZIII/IV, ZIV/VI, ZR, ZIII/VI, ZII/IV, ZV, ZIII, ZIV, ZVI) mit zumindest zwei Getriebekonstanten (C1, C2) in Wirkverbindung bringbar ist.

7. Zahnräderwechselgetriebe nach einem der Ansprüche 1 bis 6,
**dadurch gekennzeichnet,**
**daß** die Vorgelegewellen (16, 18) konzentrisch angeordnet und durch zumindest ein Schaltelement (S4) miteinander wirkungsmäßig verbindbar sind.

8. Zahnräderwechselgetriebe nach Anspruch 7, **dadurch gekennzeichnet, daß** das Schaltelement (S4) auf der den Lastschaltkupplungen (K1, K2) zugewandten Seite der zweiten Vorgelegewelle (18) angeordnet ist.

9. Zahnräderwechselgetriebe nach einem der vorhergehenden Ansprüche,
**dadurch gekennzeichnet,**
**daß** ein dem ersten Teilgetriebe (22) zugeordnetes Zahnradpaar (ZIV/VI) und ein dem zweiten Teilgetriebe (24) zugeordnetes Zahnradpaar (ZIII/IV) einem dem direkten Getriebegang (V) nächst kleineren Getriebegang (IV) zugeordnet ist.

10. Zahnräderwechselgetriebe nach einem der vorhergehenden Ansprüche,
**dadurch gekennzeichnet,**
**daß** ein Zahnradpaar (ZI/II) dem niedrigsten und zweitniedrigsten Getriebegang (I, II) zugeordnet ist.

11. Zahnräderwechselgetriebe nach Anspruch 10,
**dadurch gekennzeichnet,**
**daß** das Zahnradpaar (ZI/II) von den den Vorwärtsgetriebegängen (I, II, III, IV, V, VI) zugeordneten Zahnradpaaren (ZIV/VI, ZIII/IV, ZV, ZIII/VI, ZII/IV, ZVI, ZIII, ZIV) am nächsten zu einer Wellenlagerung der Ausgangswelle (20) in einem Getriebegehäuse angeordnet ist.

12. Zahnräderwechselgetriebe nach einem der vorhergehenden Ansprüche,
**dadurch gekennzeichnet,**
**daß** ein Zahnrad (30) für den höchsten Getriebegang (VI) auf einer zweiten Vorgelegewelle (18) angeordnet ist, die einen größeren Durchmesser aufweist als die erste Vorgelegewelle (16).

13. Zahnräderwechselgetriebe nach einem der vorhergehenden Ansprüche,
**dadurch gekennzeichnet,**
**daß** Schaltelemente (S2, S3, S4, S5, S6, S12, S13) der Teilgetriebe (78, 80, 82, 84, 86, 88, 90, 92) axial versetzt angeordnet sind.

14. Zahnräderwechselgetriebe nach einem der vorhergehenden Ansprüche,
**dadurch gekennzeichnet,**
**daß** neben den zwei Getriebekonstanten (C1, C2) drei Zahnradpaare (ZI/II, ZIII/IV, ZIV/VI) für sechs verschiedene Vorwärtsgetriebegänge (I, II, III, IV, V, VI) und ein Zahnradpaar (ZR) für zumindest einen Rückwärtsgetriebegang (R) angeordnet sind und ein Zahnrad (30) des dem vierten und sechsten Getriebegang (IV, VI) zugeordneten Zahnradpaars (ZIV/VI) auf einer zweiten Vorgelegewelle (18), ein Zahnrad (32) des dem dritten und vierten Getriebegang (III, IV) zugeordneten Zahnradpaars (ZIII/IV) und ein Zahnrad (34) des dem ersten und zweiten Getriebegang (I, II) zugeordneten Zahnradpaars (ZI/II) auf der ersten Vorgelegewelle (16) angeordnet ist.

15. Zahnräderwechselgetriebe nach einem der Ansprüche 1 bis 13,
**dadurch gekennzeichnet,**
**daß** neben den zwei Getriebekonstanten (C1, C2) drei Zahnradpaare (ZI/II, ZII/IV, ZIII/VI) für sechs verschiedene Vorwärtsgetriebegänge (I, II, III, IV, V, VI) und ein Zahnradpaar (ZR) für zumindest einen Rückwärtsgetriebegang (R) angeordnet sind und ein Zahnrad (74) des dem dritten und sechsten Getriebegang (III, VI) zugeordneten Zahnradpaars (ZIII/VI) auf einer zweiten Vorgelegewelle (18) und ein Zahnrad (76) des dem zweiten und vierten Getriebegang (II, IV) zugeordneten Zahnradpaars (ZII/IV) und ein Zahnrad (34) des dem ersten und zweiten Getriebegang (I, II) zugeordneten Zahnradpaars (ZI/II) auf der ersten Vorgelegewelle (16) angeordnet ist.

16. Zahnräderwechselgetriebe nach einem der Ansprüche 1 bis 13,
**dadurch gekennzeichnet,**
**daß** auf der ersten Vorgelegewelle (16) zumindest ein Zahnrad (94) für einen vierten Getriebegang (IV) und ein Zahnrad (34) für einen ersten und einen zweiten Getriebegang (I, II) und auf einer zweiten Vorgelegewelle (18) zumindest ein Zahnrad (96) für einen sechsten Getriebegang (VI) und ein Zahnrad (98) für einen dritten Getriebegang (III) angeordnet ist.

17. Zahnräderwechselgetriebe nach Anspruch 16,
**dadurch gekennzeichnet,**
**daß** die Zahnräder (96, 98) auf der zweiten Vorgelegewelle (18) für den dritten und den sechsten Getriebegang (III, VI) jeweils als Losrad ausgeführt sind und über ein gemeinsames Schaltelement (12) mit der zweiten Vorgelegewelle (18) wirkungsmäßig verbindbar sind.
